# EUROPEAN PATENT SPECIFICATION

(11) **EP 1 785 847 B1**
(45) Date of publication and mention of the grant of the patent: **18.11.2015**
(21) Application number: 05023554.8
(22) Date of filing: 27.10.2005
(51) Int. Cl.: G06F 9/44

(54) **Display apparatus for automatically visualizing an application landscape**
Bildanzeigevorrichtung zur automatischen Visualisierung einer Anwendungslandschaft
Dispositif d'affichage pour la visualisation automatique d'un paysage d'application

(43) Date of publication of application: 16.05.2007
(73) Proprietor: Accenture Global Services Limited, Dublin 4 (IE)
(72) Inventor: Willebrand, Fabian, 60320 Frankfurt (DE)
(74) Representative: Müller-Boré & Partner Patentanwälte PartG mbB

(56) References cited:
- US-A1- 2003 187 676

## Description

### FIELD OF THE INVENTION

The present invention refers to a display apparatus and a method for automatically visualizing an application landscape.

### BACKGROUND OF THE INVENTION

In the manufacturing industry as well as in the service sector, each product offered or processed by a company involves a series of stages of work including development, production, marketing, and risk management, for example. In the automotive industry, for example, a series of industrial products such as tires, mudguards, windows, and electronic components are fabricated, bought, sold and/or assembled. For each of these products a series of processes comprising single work steps and complex workflows arise. These processes may comprise designing, quality management, component testing, warehouse management, assembling the components, backend testing and many more.

Most of these processes are supported by a series of Information Technology (IT) applications. The designing processes may be supported by computer aided design (CAD) software, for example. The same CAD applications, for example, are applied in connection with several products, such as mudguards, hoods, and dashboards. Accordingly, one and the same application supports a certain process performed in connection with different products. Other applications may be used in connection with different processes on a certain product. Specialized software for simulating and evaluating aerodynamics, for example, may be used both for designing and testing mudguards, for example. Even further applications may support different processes on different products. In particular, internal communication software or software for stock control, for example, may be applied in connection with a series of different processes on different products.

Similar structures also exist in companies of the service sector, where the products typically are service products, such as deposit business, lending business, or securities business in a banking company, for example. The processes performed in connection with these products are also supported by a plurality of applications, where again each application may support a series of processes for a series of products. Some applications may use information provided by another application or may have an overlap in the data or even in the algorithm used.

When the business processes or subject responsibilities in a company change, also the requirements on existing applications change. When changing an individual application used in connection with a certain process, however, it is typically not sufficient to only look at its immediate context within this process. Small changes in an application for a certain process may cause further changes where this application is applied in connection with a different process and/or a different product. Accordingly, changing the IT-structure in a company indispensably requires a detailed overview of these complex structures, i.e. the application landscape.

In this connection, a visualization of an application landscape, particularly of the complex structure connecting processes on products with the respective software applications, offers a useful support. In particular, an application landscape may be visualized by means of a process-product matrix, where one axis shows a plurality of processes, while the other axis presents a plurality of products. For a particular process on a particular product the required applications are presented in the respective cell of such a matrix. In big companies typically a large number of IT-applications are used for supporting processes performed on or in connection with a plurality of products. The IT management is particularly difficult, if the IT architecture is gradually grown and has a high complexity. Accordingly, the resulting visualization of such an application landscape becomes large and confusing and when presenting such an application landscape on a conventional visual medium, such as a monitor or a print out with reasonable size, the labelling of the individual processes, products and applications becomes illegibly small. The finite resolution of conventional screen displays makes this task even more difficult.

Accordingly, it is an object of the present invention to provide a display apparatus, a computer-implemented method, and a computer program product for visualizing an application landscape in a compact and well readable manner such as to reduce the requirements with respect to the graphical respolution of output devices. This object is solved by a display apparatus and a computer implemented method having the features defined in the independent claims. Preferred embodiments are described in the dependent subclaims.

### SUMMARY

Accordingly, the present invention provides a display apparatus for visualizing an application landscape which represents the assignment of applications, such as computer programs, subroutines and/or databases, for example, to a plurality of processes, such as individual steps or work flows in development, production, marketing, and/or risk management, for example, performed in connection with a plurality of products, such as manufacturing products like mudguards, car seats or control instruments in the automotive industry and/or service products like deposit business, lending business, or securities business in the banking business, for example, the apparatus comprising:
- an input device for receiving data defining the assignment of the applications to the plurality of processes when performed in connection with the plurality of products;
- a matrix definition component for defining a matrix comprising a plurality of cells arranged in
   - a plurality of rows representing the plurality of one of the processes and the products; and
   - a plurality of columns representing the plurality of the other of the processes and the products;
- a cell assignment component for creating for each of the plurality of cells a content container identifying the applications assigned to the process in the product represented by the cell;
- an evaluation component capable of performing for at least one cell, which will be called the current cell in the following, the following steps:
   - reading the content container of the cell for determining the applications assigned to the cell;
   - performing a presentation preparation step for the at least one application comprising the following steps:
      - selecting a presentation direction for the application from a direction substantially parallel to the rows and a direction substantially parallel to the columns of the matrix depending on how many of the content containers of the cells in the current row and/or how many of the content containers of the cells in the current column contain the application;
      - defining a presentation box, which is preferably substantially rectangular, extending in the presentation direction over one or more cells comprising the current cell and all cells in which the application is identified in the content container and which are positioned in the presentation direction side by side to each other adjacent to the current cell, where preferably the presentation box does not overlap with any other presentation box defined for the same presentation direction;
      - determining an application identification pattern for being presented in the presentation box; and
      - determining the minimum size of the presentation box (necessary) for enclosing the application identification pattern;
   - determining the minimum width of the columns and the minimum height of the rows of the matrix (necessary) for enclosing the at least one presentation box; and
- an output device for visualizing the matrix together with the at least one presentation box enclosing the application identification pattern.

Accordingly, a display apparatus according to the present invention automatically visualizes an application landscape in a clearly structured and well readable manner. In particular, the automatic adaptation of the presentation direction for an application to the number of appearances of this application in the corresponding row and column, together with the eventual extension of the presentation box in the presentation direction in order to combine multiple appearances of a single application in neighbouring cells within one presentation box results in a compact visualization of the application landscape. In addition, this allows a reliable visualization of the structure of the application landscape by emphasizing the connection of different processes or products via common applications. Moreover, the automatic determination of the box size depending on the identification pattern, which may be a logo and/or a name of the application, for example, ensures the readability of the presentation.

In a first preferred embodiment each of the plurality of rows represents one of the plurality of products, while each of the plurality of columns represents one of the plurality of processes. In another preferred embodiment the role of rows and columns is exchanged so that each of the plurality of rows represents one of the plurality of processes, while each of the plurality of columns represents one of the plurality of products. The evaluation component preferably operates on each cell one after the other, most preferably by the row from the upper left corner to the lower right corner.

For each application identified in at least one content container the content container further defines whether the application is activated or deactivated in the cell. Accordingly, an activation status is preferably assigned to each application in each content container. The apparatus comprises a component for performing for at least one cell the step of determining the activation status for at least one of the assigned applications, i.e. determining whether the application is activated or deactivated in the cell. The presentation preparation step for the at least one application is only performed if the application is activated and/or not deactivated in the cell and the presentation box is defined so as to extend in the presentation direction substantially over the current cell and all cells in which and only in which the application is activated and/or not deactivated and which are positioned in the presentation direction side by side to each other adjacent to the current cell. The apparatus further comprises a component for deactivating the application in all cells in which and only in which the application is activated and/or not deactivated and which are positioned in the presentation direction side by side to each other adjacent to the current cell.

The evaluation component preferably is capable of performing in the step of selecting a presentation direction the steps of:
- determining a row related appearance number defining how many of the content containers of the cells in the current row contain the application, and determining a column related appearance number defining how many of the content containers of the cells in the current column contain the application; and
- selecting a presentation direction for the application from a direction substantially parallel to the rows and a direction substantially parallel to the columns of the matrix depending on the row related and/or the column related appearance number of the application and further preferably depending on the difference between the row related and the column related appearance number of the application.

In a most preferred embodiment of the apparatus a vertical presentation direction is selected for the application only if the vertical appearance number is by more than one larger than the horizontal appearance number. Preferably, the evaluation component is capable of performing in the presentation preparation step a step of assigning the application in the current cell to a presentation slot extending in the presentation direction substantially over the whole matrix, where the presentation slot is a subdivision of the current row or a subdivision of the current column if the presentation direction is substantially parallel to the rows or the columns, respectively, so as to preferably obtain a row related presentation slot or a column related presentation slot, respectively. Preferably, the presentation box is positioned substantially inside the presentation slot.

In a preferred embodiment of the display apparatus assigning the application in the current cell to a presentation slot comprises:
- determining, whether a presentation slot for the selected presentation direction, which intersects with the current cell and to which the application has been assigned in another cell, already exists;
- assigning the application to the presentation slot in the current cell, if such a presentation slot already exists;
- creating a new presentation slot and assigning the application in the current cell to the new presentation slot, if such a presentation slot does not already exist.

Preferably, different presentation slots for the same presentation direction do not substantially overlap. Adjacent presentation slots preferably have a common boarder line. In a preferred embodiment the display apparatus further comprises a grouping component capable of performing a step of shifting and/or moving and/or relocating all presentation boxes located in a first presentation slot to a second presentation slot if for all cells, in which the first presentation slot is occupied by the presentation boxes, the second presentation slot is not occupied by any presentation boxes. Further preferably, the grouping component is capable of deleting the empty first presentation slot after all presentation boxes originally positioned in this slot are shifted to the second presentation slot.

The display apparatus further comprises an overlap elimination component capable of performing
- a step of determining at least one overlap cell in which at least one overlap between presentation boxes for different presentation directions occurs;
- a first overlap elimination step comprising reducing the size of at least one first presentation box having a first presentation direction by shifting a first edge of the first presentation box within the overlap cell in a first shifting direction parallel to the first presentation direction until the first presentation box does no longer overlap with any presentation box having a second presentation direction different from the first presentation direction within the overlap cell.

The overlap elimination component is capable of performing after the first overlap elimination step a second overlap elimination step comprising reducing the size of at least one second presentation box having the second presentation direction by shifting a second edge of the second presentation box within the overlap cell in a second shifting direction parallel to the second presentation direction until the second presentation box does no longer overlap with any presentation box having the first presentation direction within the overlap cell.

The overlap elimination component is further capable of performing after the second overlap elimination step a third overlap elimination step comprising increasing the size of the first presentation box by shifting the first edge of the first presentation box within the overlap cell against the first presentation direction as long as no overlap with any presentation box having the second presentation direction is creating within the overlap cell.

The present invention further provides a computer implemented method of drawing up an application landscape visualizing the assignment of applications, such as computer programs, subroutines and/or databases, for example, to a plurality of processes, such as individual step or work flows in development, production, marketing, and/or risk management, for example, performed in connection with a plurality of products, such as manufacturing products like mudguards, car seats or control instruments in the automotive industry and/or service products like deposit business, lending business, or securities business in the banking business, for example, the method comprising the steps of:
a) defining a matrix comprising a plurality of cells arranged in
   a1) a plurality of rows representing the plurality of one of the processes and the products; and
   a2) a plurality of columns representing the plurality of the other of the processes and the products;
b) creating for each of the plurality of cells a content container identifying the applications assigned to the process in the product represented by the cell;
c) performing for at least one cell, which in the following is preferably called the current cell, the following steps:
   c1) reading the content container of the cell for determining the applications assigned to the cell;
   c2) performing a presentation preparation step for the at least one application comprising the following steps:
      c2a) selecting a presentation direction for the application from a direction substantially parallel to the rows and a direction substantially parallel to the columns of the matrix depending on how many of the content containers of the cells in the current row and/or how many of the content containers of the cells in the current column contain the application;
      c2b) defining a presentation box, which is preferably substantially rectangular, extending in the presentation direction over one or more cells comprising the current cell and all cells in which the application is identified in the content container and which are positioned in the presentation direction side by side to each other adjacent to the current cell, where the presentation box preferably does not substantially overlap with any other presentation box defined for the same presentation direction;
      c2c) determining an application identification pattern for being presented in the presentation box; and
      c2d) determining the minimum size of the presentation box (necessary) for enclosing the application identification pattern;
d) determining the minimum width of the columns and the minimum height of the rows of the matrix (necessary) for enclosing the at least one presentation box;
e) visualizing the matrix together with the at least one presentation box enclosing the application identification pattern.

Accordingly, each cell represents a particular process within a particular product. Preferably, at least one application is used in connection with a plurality of processes and/or a plurality of products, so that at least this application is assigned to a plurality of cells in the matrix. Further preferably, the content container of at least one cell contains a plurality of applications. Selecting a presentation direction preferably means selecting "horizontal" (left - right) or "vertical" (up - down) without distinguishing between different orientations. Alternatively, when selecting a presentation direction it may even be distinguished between different orientations (left or right or up or down). Defining a matrix preferably comprises identifying row indices and/or names and column indices and/or names. In case of a plurality of presentation boxes are presented, they preferably do not substantially overlap, i.e. they may have a common boarder line but preferably do not form an overlap area.

For each application identified in at least one content container the content container further defines whether the application is activated or deactivated in the cell. The method further comprises for at least one cell the step of determining for at least one of the assigned applications whether the application is activated or deactivated in the cell. The presentation preparation step c2) for the at least one application is only performed if the application is activated and/or not deactivated in the cell. The presentation box is defined so as to extend in the presentation direction over the current cell and all cells in which and only in which the application is activated and/or not deactivated and which are positioned in the presentation direction side by side to each other adjacent to the current cell. The method further comprises a step of deactivating the application in all cells in which and only in which the application is activated and/or not deactivated and which are positioned in the presentation direction side by side to each other adjacent to the current cell. Preferably the application is not deactivated in the current cell itself.

The step of selecting a presentation direction preferably comprises the steps of:
- determining a row related appearance number defining how many of the content containers of the cells in the current row contain the application, and determining a column related appearance number defining how many of the content containers of the cells in the current column contain the application; and
- selecting a presentation direction for the application from a direction substantially parallel to the rows and a direction substantially parallel to the columns of the matrix depending on the row related and/or the column related appearance number of the application, preferably depending on the difference between the row related and the column related appearance number of the application. It is particularly preferred that a vertical presentation direction is selected for the application only if the vertical appearance number is by more than one larger than the horizontal appearance number.

Preferably, the presentation preparation step c2) comprises a step of assigning the application in the current cell to a presentation slot extending in the presentation direction substantially over the whole matrix, where the presentation slot is a subdivision of the current row or a subdivision of the current column if the presentation direction is substantially parallel to the rows or the columns, respectively, so as to obtain a row related presentation slot or a column related presentation slot, respectively. The presentation box preferably is positioned substantially inside the presentation slot.

In a preferred embodiment the step of assigning the application in the current cell to a presentation slot comprises
- determining, whether a presentation slot for the selected presentation direction, which intersects with the current cell and to which the application has been assigned in another cell, already exists;
- assigning the application to the presentation slot in the current cell, if such a presentation slot already exists;
- creating a new presentation slot and assigning the application in the current cell to the new presentation slot, if such a presentation slot does not already exist.

Most preferably, different presentation slots for the same presentation direction do not substantially overlap.

The method further preferably comprises a step of shifting and/or moving and/or relocating all presentation boxes located in a first presentation slot to a second presentation slot if for all cells, in which the first presentation slot is occupied by the presentation boxes, the second presentation slot is not occupied by any presentation boxes. Preferably, empty presentation slots are deleted afterwards.

The method further comprises
- a step of determining at least one overlap cell in which at least one overlap between presentation boxes for different presentation directions occurs;
- a first overlap elimination step comprising reducing the size of at least one first presentation box having a first presentation direction by shifting a first edge of the first presentation box within the overlap cell in a first shifting direction parallel to the first presentation direction until the first presentation box does no longer overlap with any presentation box having a second presentation direction different from the first presentation direction within the overlap cell.

In addition, the method comprises after the first overlap elimination step a second overlap elimination step comprising reducing the size of at least one second presentation box having the second presentation direction by shifting a second edge of the second presentation box within the overlap cell in a second shifting direction parallel to the second presentation direction until the second presentation box does no longer overlap with any presentation box having the first presentation direction within the overlap cell.

Further, the method further comprises after the second overlap elimination step a third overlap elimination step comprising increasing the size of the first presentation box by shifting the first edge of the first presentation box within the overlap cell against the first presentation direction as long as no overlap with any presentation box having the second presentation direction is creating within the overlap cell.

The invention further provides a computer program product comprising program code, which when loaded in a computer system causes the system to perform steps according to a method as described above.

These and other objects, features and advantages of the present invention will become more apparent upon reading of the following detailed description of preferred embodiments and accompanying drawings. It should be understood that even though embodiments are separately described, single features thereof may be combined to additional embodiments.
- Fig. 1:: shows a display apparatus according to a preferred embodiment of the present invention;
- Fig. 2:: shows a first exemplary application landscape presented by a display apparatus according to a preferred embodiment of the present invention;
- Figs. 3 and 4:: show schematics of processes which are preferably applied in a method according to the present invention;
- Figs. 5A and 5B:: show a second exemplary application landscape presented by a display apparatus according to a preferred embodiment of the present invention.

### DETAILED DESCRIPTION

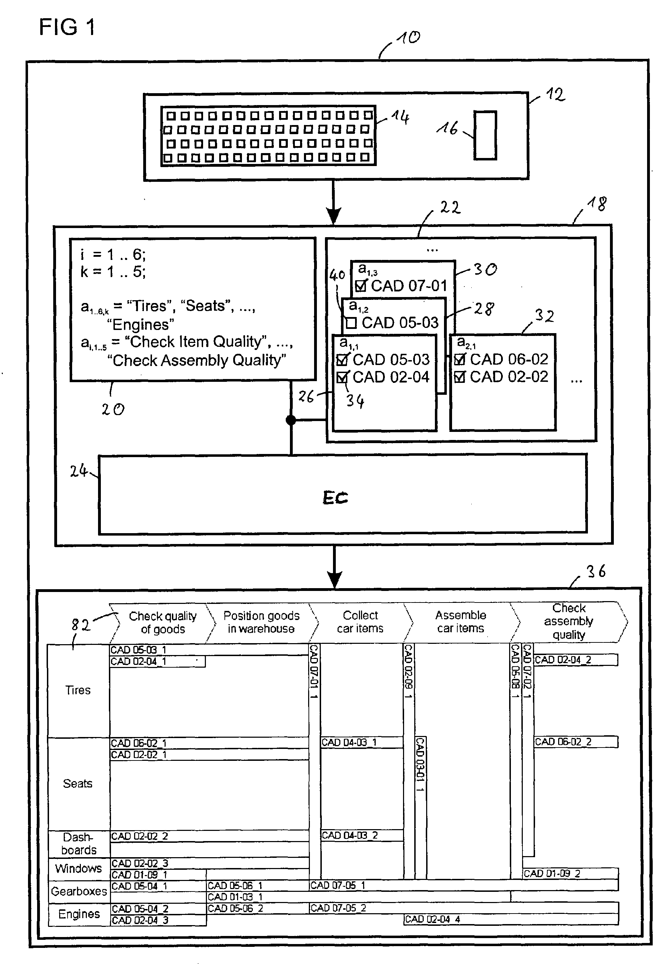

In a preferred embodiment of the present invention a display apparatus 10 as shown in Fig. 1 comprises an input device 12 for receiving data. Preferably, data are inputted via a keyboard 14, which is preferably comprised as part of the input device 12. Alternatively or in addition to the keyboard 14, the input device 12 may comprise an interface 16 for receiving data via a one-, bi- or multidirectional network, such as the Internet. The interface 16 may preferable be directly connected to a network in a company, where at least part of the applications to be visualized as an application landscape run on this network. Particularly, such an application landscape may correspond as described above to a complex structure connecting processes on products with the respective software applications, offers a useful support. In particular, an application landscape may be visualized by means of a process-product matrix, where one axis shows a plurality of processes, while the other axis presents a plurality of products. Most preferably, the apparatus 10 is capable of communicating with the applications via the interface 10. The display apparatus 10 may automatically receive data defining correlation and assignment of individual application to certain processes and/or products form the network. The display apparatus may also send status requests to the network and/or to individual applications and perform consistency checks for the application structure or for certain workflows based on the response to the status requests received via the interface 16.

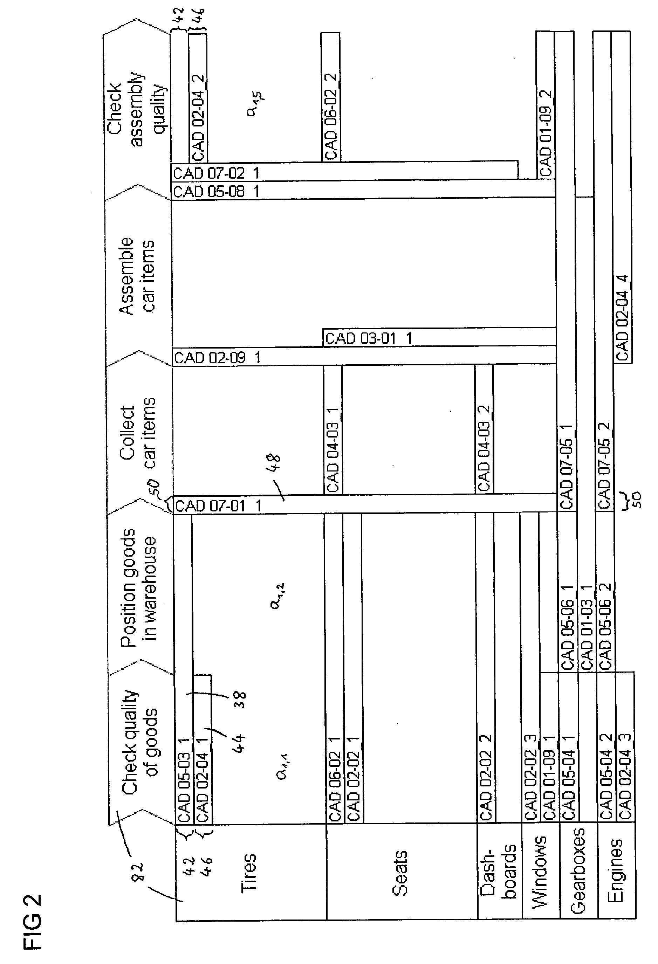

Fig. 1 particularly demonstrates an example from the automotive industry, i.e. the data received via the input device 12 define products and processes typical for a company fabricating cars and car equipment. The products as exemplary shown in the following comprise "tires", "seats", "dashboards", "windows", "gearboxes", and "engines". As typical processes performed in the automotive industry in connection with the exemplary listed products the example of the Figs. 1 and 2 mentions the processes of "check quality of goods", "position goods in warehouse", "collect car items", "assemble car items", and "check assembly quality", for example. Whenever a certain process, such as checking the quality of goods, is performed for or in connection with a certain product, such as tires, for example, this particular work step is supported by certain applications. In the present example, checking the quality of tires is supported by the applications "CAD 05-03" and "CAD 02-04". One of these applications may be a control software for a robot camera and/or a test apparatus, such as a centrifuge for testing tires, for example. Further, at least one of the applications may be some database management software, for example. Although, the display apparatus is exemplary described for the automotive industry in the following, the same components and structural details of the display apparatus 10 also applies to any other business sector.

The inputted/received data are transmitted to and processed by a processing unit 18 of the display apparatus 10. In the present embodiment the processing unit 18 comprises a matrix definition component 20, a cell assignment component 22 and an evaluation component 24. Based on the received data the matrix definition component 20 defines a matrix comprising a plurality of cells arranged particularly in rows and columns. Preferably, the matrix definition component 20 defines row indices i and column indices k, so that each cell in the matrix is identified by the pair of indices (i, k). In the example shown in Fig. 1 the matrix definition component 20 defines a matrix with six rows (i = 1 to 6) and five columns (k = 1 to 5), where each row represents one product typical for the automotive industry, such as "tires", "seats", or "engines". Each column on the other hand represents a particular process performed in the automotive industry in connection with fabrication or assembling the products, for example. These processes exemplarily comprise "checking quality of goods", "position goods in warehouse", and/or "assemble car items".

For each of the cells defined by the matrix definition component 20 the cell assignment component 22 creates a content container 26, 28, 30, 32. The content containers 26, 28, 30, 32 preferably are lists of applications assigned to a particular cell, i.e. applications used in connection with a particular process performed in connection with a particular product. Based on the respective assignment information received via the input device 12, the cell assignment component 22 adds the applications to the respective content containers. The two applications "CAD 05-03" and "CAD 02-04" assigned to the particular process of checking the quality of tires, for example, are added to the content container 26 of a first cell a_{1,1}, which represents the process "check quality of goods" in connection with the product "tires". This preferably means, that these two IT-applications are applied when the quality of tires is checked. Further, as shown in Fig. 1, the cell assignment component 22 assigns an activation status to each application listed in the content containers 26, 28, 30, 32. The activation statuses are represented by checkboxes or elements 34.

Starting from the matrix as defined by the matrix definition component 20 and the content containers defined by the cell assignment component 22, the evaluation component 24 scans through the matrix preferably cell by cell, determines the applications assigned to the cell, performs a presentation or display preparation step for each application and determines the minimum width of the columns and the minimum height of the rows of the matrix, and transmits the matrix data to an output device 36. This output device 36 preferably comprises a monitor and/or a video projector and/or a printer, for example. Any device capable of visually presenting or displaying the matrix may be suitable as an output device 36 in connection with the present invention.

The details of the operations performed by the evaluation component 24 according to a preferred embodiment of the present invention become more apparent in connection with the finally achieved application landscape shown in more detail in Fig. 2. In particular, Fig. 2 shows an exemplary process-product matrix (as a preferred application landscape) typical for the automotive industry. As already described in connection with Fig. 1, preferably each IT-application, that is needed when carrying out a particular process on or in connection with a particular product, enters the cell which represents this process and the product in the process-product matrix. Alternatively, a priority status and/or rank value is assigned to each of the applications and only those applications are considered when preparing in the process-product matrix, the priority status and/or rank value is higher than a predefined detail value. This allows to reduce the size of the resulting product-process matrix depending on the desired degree of details to be presented.

In the preferred embodiment according to Fig. 2, when checking the quality of tires the two applications "CAD 05-03" and "CAD 02-04" are exemplary carried out. Accordingly, these two applications are listed in the content container 26 of the cell a_{1,1}, which represents the process "check quality of goods" for the product "tires". This first cell a_{1.1} is preferably intended to be presented on the upper left corner of the process-product matrix. The mentioned applications may be listed in further content containers also. The application "CAD 05-03", for example, is also listed in the cell a_{1,3}, indicating, that this application is also needed when positioning tires in the warehouse.

The evaluation component 24 preferably analyzes each cell one after the other, most preferably by the row of the matrix, e.g., from the upper left corner to the lower right corner. In particular, the evaluation component 24 reads the content containers 26, 28, 30, 32 of each of the cells. The evaluation component 24 starts with the content container 26 of the first cell a_{1,1} and recognizes the first application "CAD 05-03". A draw command is created for this application, i.e. a first presentation box 38 is defined. For this, a presentation direction may be selected from a vertical and horizontal direction based on how often this first application appears in the same row and how often this application appears in the same column. The evaluation component 24 counts or lists how often this first application appears in the first row. In the example shown in Fig. 2 the first application "CAD 05-03" appears twice in the first row, namely in the cells a_{1,1} and a_{1,2}, but only once in the first column, namely in the current cell itself. Accordingly, the horizontal presentation direction is selected for the first application in the first cell.

Next, the evaluation component 24 performs a step of checking whether the currently analyzed application also appears in neighboring cells which are adjacent (particularly arranged at left, right, upper and/or bottom side) to the current cell in the presentation direction. Preferably, all cells positioned in the presentation direction relative to the current cell, i.e. all cells in the current row or column depending on the presentation direction, are analyzed to check whether their content containers contain the currently analyzed application. Most preferably, only those cells are considered in which the currently analyzed application is activated and/or not deactivated. In case such a cell adjoining the current cell in the presentation direction and containing the currently analyzed application in its content container is found, the current draw command is extended to this cell, i.e. the presentation box is extended to cover part of the current cell and the respective neighbouring cell. Moreover, the presentation box is preferably extended to all cells which are positioned in the presentation direction side by side to each other and which adjoin the current cell, so that a continuous presentation box is defined.

In the present example of Figs. 1 and 2 the evaluation component 24 determines that the currently analyzed application "CAD 05-03" in the first cell a_{1,1} is also listed in the content container 28 of a second cell a_{1,2} arranged quite next to the first cell a_{1,1} in the presentation direction, which in the present example is the row direction and in particular the horizontal direction. Accordingly, the draw command is extended, i.e. the first presentation box 38 is extended to cover both the first cell a_{1,1} and the neighbouring second cell a_{1,2} which also comprises the currently analyzed application. This first application "CAD 05-03", therefore, is deactivated in the second cell a_{1,2} as indicated by the empty checkbox 40 in Fig. 1.

Further, a first horizontal presentation slot 42 is provided for the first application "CAD 05-03" in the first row. This first horizontal presentation slot 42 represents a subdivision of the first row in vertical direction, while it extends over the whole matrix in horizontal direction. Preferably, the first horizontal presentation slot 42 is reserved for the first application "CAD 05-03", so that no other horizontally presented application uses the first horizontal presentation slot 42, which further preferably is provided at the upper end of the first row.

Further, the next application "CAD 02-04", which is activated and/or not deactivated, is read from the first content container 26 of the first cell a_{1,1}. It is found, that this application appears twice in the first row, namely in the cells a_{1,1} and a_{1,5}, And twice in the first column, namely in the cells a_{1,1} and a_{6,1}. In the preferred embodiment as shown in Fig. 2 an application is only presented vertically, if it appears more often by more than one in the current column than in the current row. Accordingly, the second application "CAD 02-04" in the first cell a_{1,1} is also presented horizontally, i.e. a horizontal presentation box 44 is prepared. The evaluation component 24 again performs a step of checking whether the second application "CAD 02-04" also appears in neighbouring cells which are adjacent (particularly arranged at left, right, upper and/or bottom side) to the current cell in the presentation direction. Preferably the same analysis is performed as for the first application.

In the demonstrated example, no neighbouring cell in the horizontal direction contains the second application "CAD 02-04", so that the second presentation box 44 is drawn as not extending beyond the first cell a_{1,1}. A second horizontal presentation slot 46 is provided and the second application "CAD 02-04" is assigned thereto. Preferably, the second horizontal presentation slot 46 borders on the first horizontal presentation slot 42 and is positioned directly underneath this. Further preferably, the second horizontal presentation slot 46 is reserved for the second application "CAD 02-04", so that no other application is positioned within this slot at this stage of the presentation preparation procedure.

Before creating and/or reserving a new presentation slot, the evaluation component 24 preferably checks, whether a presentation slot for the particular presentation direction that is assigned to the currently analyzed application already exists in the currently analyzed cell. Such a presentation slot may have been defined during the analysis of a previous cell also containing the currently analyzed cell. If such a presentation slot already exists, the application, i.e. the presentation box for the application is assigned to this presentation slot. In the shown example, as the second application "CAD 02-04" also appears in the rightmost cell of the first row, the cell a_{1,5}, the same presentation slot 46 is also in this cell. There may be provided a count index that may be added to the identification pattern for the applications and that may be presented in the presentation box when displaying the application landscape. According to the preferred embodiment shown in Fig. 2 the index "2" added to the identification pattern "CAD 02-04" in the cell a_{1,5} preferably indicates that in this cell it is the second time that the application appeared in the matrix with an activated status, while in the first cell a_{1,1} the application appeared for the first time.

After the content container 26 of the first cell a₁,₁ has been read completely, the next cell, preferably an adjacent cell (most preferably the second cell a_{1,2}) is analyzed, i.e. its content container 28 is read. As shown in Fig. 1, however, the content container 28 of the second cell a_{1,2} has no activated application listed so that the process continues with analyzing the third cell, which preferably is cell a_{1,3}. The third cell a_{1,3} only contains one application "CAD 07-01 ", which appears only once in the current row, i.e. the first row, but four times in the present column, the third column. Accordingly, a vertical presentation direction is selected for this third application "CAD 07-01". As all four cells in the current column containing the third application "CAD 07-01" are neighboring cells in the vertical direction, the draw command, i.e. the third presentation box 48, is extended in vertical direction to cover part of these four cells. While the application remains activated in the current cell (the third cell a_{1,3}), it is deactivated in the three additional cells below the current cell, to which the third presentation box 48 is extended. The third presentation box is assigned to first vertical presentation slot 50, which is a subdivision of the third column in horizontal direction and which extends over the whole matrix in vertical direction. This first vertical presentation slot 50 is preferably positioned at the left edge of the third column. After having reached the end of the first row, the evaluation component 24 preferably continues with the second row, and particularly with the leftmost cell a_{2,1} in the second row, and so on.

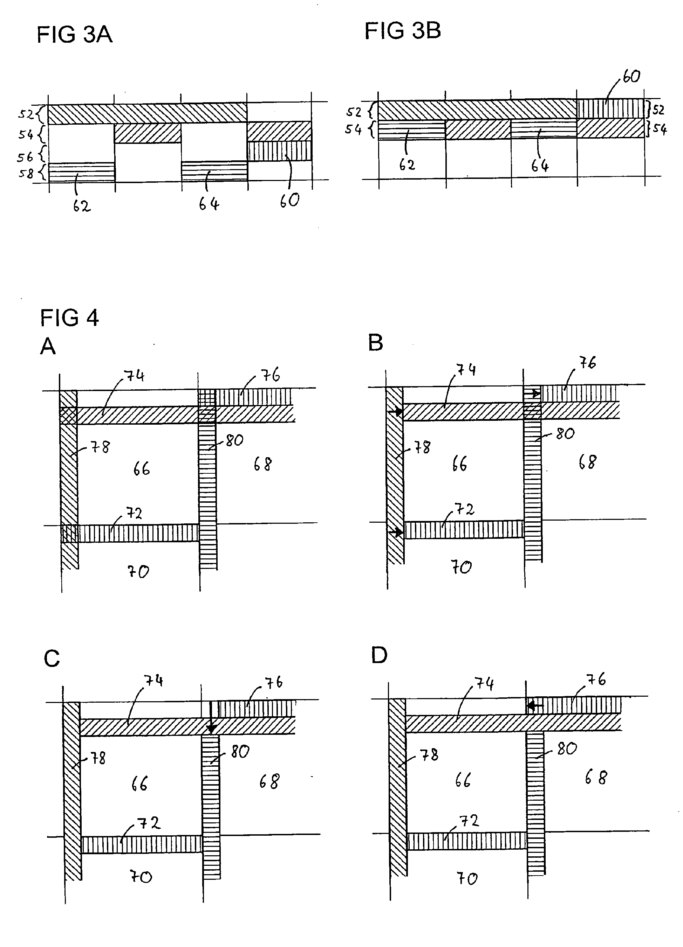

Preferably after having analyzed all cells as described above, the evaluation component 24 preferably performs a combination and/or grouping step, in which presentation slots are combined where possible, in order to make the application landscape more compact. This is demonstrated in Fig. 3. Fig. 3A shows four neighbouring cells within one row. Four different applications (indicated with four different shadings) are assigned to four different horizontal presentation slots 52, 54, 56, 58.

Preferably, the evaluation component 24 analyzes the individual presentation slots within one row and/or column starting at a first presentation slot 58 and checks, whether there exists another presentation slot within the same row or column, respectively, which is empty, i.e. not occupied by a presentation box, in all cells where the first presentation slot is occupied by presentation boxes 62, 64. If such a second presentation slot 54 is found, the presentation boxes 62, 64 of the first presentation slot 58 are shifted to the second presentation slot 54. As in the row shown in Fig. 3A the application assigned to a third presentation slot 56 only covers the right most cell, while this particular cell is empty, i.e. not covered by the application which is assigned to the fourth horizontal presentation slot 52, a presentation box 60 of the third application can be shifted from the third horizontal presentation slot 56 to the fourth horizontal presentation slot 52, without creating an overlap of presentation boxes with the same presentation direction. Analogously, the presentation boxes 62 and 64 in the horizontal presentation slot 58 can be simultaneously shifted within their cell to the horizontal presentation slot 54, which is not occupied by other presentation boxes in the first and the third column, respectively. The resulting compact presentation is shown in Fig. 3B. The third 56 and fourth 58 horizontal presentation slots are preferably empty now, so that they can be deleted.

It is further preferred that the overlap of presentation boxes with different presentation directions is reduced. Fig. 4 demonstrates a procedure performed by the evaluation component 24 according to a preferred embodiment of the present invention. Most preferably, the steps are performed before the presentation boxes are presented via the output device 36. Fig. 4 shows four stages of the preferred procedure. The demonstrated section of an application landscape comprises a first cell 66, a second cell 68 next to the first cell 66 in the same row, and a third cell 70 next to the first cell 66 within the same column. The presented section shows three horizontal presentation boxes 72, 74, and 76 and two vertical presentation boxes 78 and 80.

In a first step, demonstrated in Fig. 4B, the left edges of the horizontal presentation boxes 72, 74, and 76 are shifted to the right within the respective cell, until these horizontal presentation boxes do no longer overlap with the vertical presentation boxes 78 and 80 within the respective cell. For each of the horizontal presentation box the left edge is only shifted within one cell. In particular, the left edge of the second horizontal presentation box 74 is not shifted into the second cell 68 beyond the second presentation box 78. Instead, this left edge is only shifted within the first cell 66 until the second horizontal presentation box 74 does no longer overlap with the first vertical presentation box 78. Next, as shown in Fig. 4C, the upper edges of all vertical presentation boxes are shifted downwards within one cell until the respective vertical presentation box does no longer overlap with any horizontal presentation box within the particular cell. In the situation demonstrated in Fig. 4C, the first vertical presentation box 78 does not overlap with any other cell in the first cell 66. Accordingly, the upper edge is not shifted. In the second cell 68, however, the second vertical presentation box 80 overlaps with the second horizontal presentation box 74, as seen in Fig. 4B. Accordingly, the upper edge of the second vertical presentation box 80 is shifted downwards until the second vertical presentation box 80 does no longer overlap with the second horizontal presentation box 74. Finally, as shown in Fig. 4D, the left edges of the horizontal presentation boxes are shifted to the left again within the same cell as far as possible without creating additional overlap on the horizontal presentation boxes with any vertical presentation box. Accordingly, the left edge of the horizontal presentation box 76 is shifted to the left edge of the second cell 68. This procedure reduces the overlap of different presentation boxes and, therefore, significantly improves the clarity and readability of the application landscape.

Preferably, before presenting or visualizing the application landscape, i.e. the prepared process-product matrix, by means of the output device 36, the minimal height and the minimal width of each presentation box is determined. It is particularly preferred, that the applications represented by the presentation boxes are identified in the application landscape by presenting an identification pattern within the presentation boxes. This identification pattern may be a sign, a logo and/or at least part of the name on the application. Preferably, a step of determining the size of the identification pattern sufficient to be legible and/or identifiable and a step of assigning the required size of the respective presentation box at least sufficient to accommodate the respective identification pattern are performed.

Most preferably, the sizes of the presentation boxes are determined on the basis of a defined font style, font size and text pattern, such as XX-XX-XX-XX, for example. Depending on the presentation direction defined for the presentation boxes also the text and/or the text pattern preferably is presented in the same presentation direction. Accordingly, the height of a horizontal presentation box is preferably defined by the height of the text pattern XX-XX-XX-XX in the predefined font style and font size, while the width of the horizontal presentation boxes as defined by the length of the text pattern. For the vertical presentation boxes the requirements for height and width are exchanged. Accordingly, the size of the presentation boxes is adapted so that the sign, the logo and/or the name of the application is presented in a readable size.

Further, also the height and/or width of a label box 82 is/are determined from the length of the text to be presented for labelling the respective row and/or columns on the matrix. A special font style and font size may be defined for labelling, which may be different from the font style and size of the applications. Preferably, for labelling the rows and columns, i.e. labelling products and processes the real names of the products and processes may be used for determining the required height and width of the labelling boxes 82 instead of using a text pattern like in the case of the applications. Preferably, the width of a column of the matrix is given by the required width of the respective labelling box of the process or the width of a widest cell in the column, what ever is wider. The width of a cell increases the more vertical presentation boxes are included. The analogous correlation applies for height of the cell in connection with the horizontal presentation boxes. After the height and width has been determined for all rows and columns, the application landscape is presented by means of the output device, where the identification patterns, i.e. the labelling, is presented for each presentation box including the presentation boxes for the applications and the labelling of the processes and products. The applications and/or processes and/or products are preferably colour-coded. The application landscape may be directly presented visually, by means of a monitor and/or a printer. Further, the result may also be saved in a PNG file and/or a Corda-XML file.

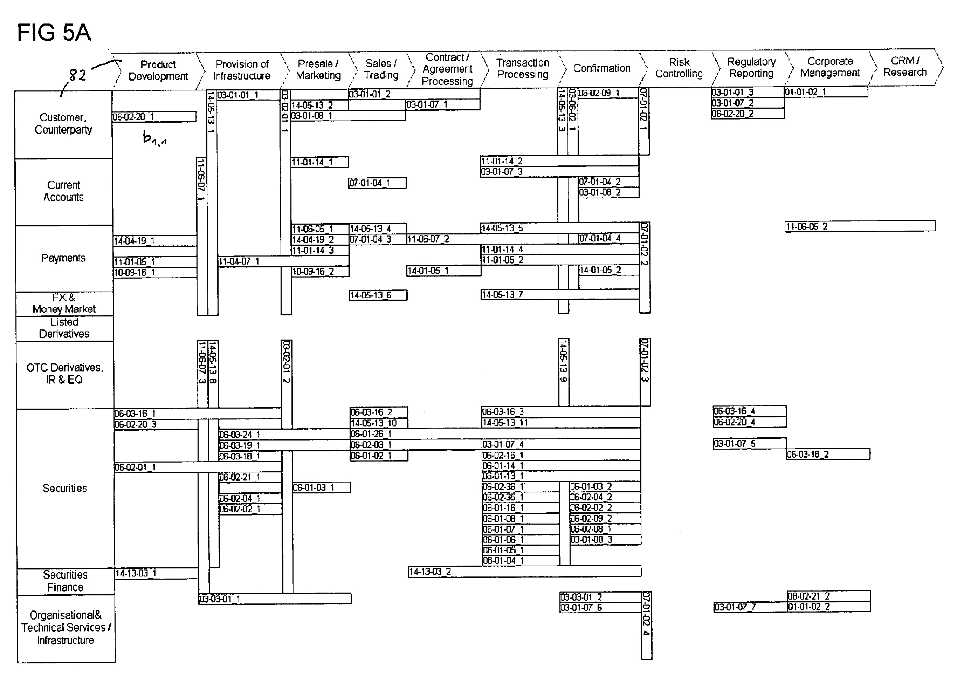

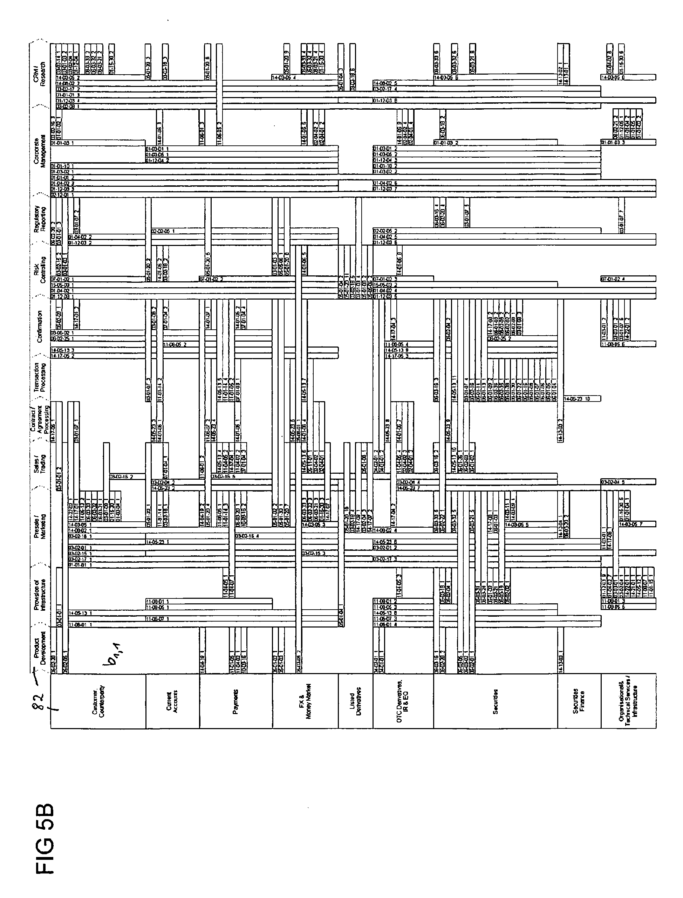

Figs. 5A and 5B show further examples of application landscapes drawn up with a method and presented by a display apparatus according to a preferred embodiment of the present invention. These examples are directed to applications of a company in the service sector, in particular to the bank sector. Again, the rows represent main bank products, such as "current account", "payment", and "securities", while the columns represent top business processes, such as "product development", "sales", and "risk management", for example. The application, that are used in the business processes in connection with the main bank products are presented as individual presentation boxes as described in connection with the automotive industry above.

As already mentioned above, it is preferred, that a priority status and/or rank value is assigned to at least part of the applications. This rank value may be assigned to the respective entries in the content containers. A user preferable sets an accuracy or detail value or parameter which is preferably inputted via the input device 12 and which defines a degree of detail that should be presented in the visualization of the application landscape. When preparing the process-product matrix preferably only those applications are considered and presented, the priority status and/or rank value of which is higher than a predefined detail value. This allows to reduce the size of the resulting product-process matrix.

Figs. 5A and 5B are presentations for the same company and, in particular, visualizations of the same application landscape, where Fig. 5B shows the application landscape in more detail. In particular, Fig. 5A does not show all of the applications presented in Fig. 5B. Preferably, only the most important applications, i.e. applications with a high rank value, which is higher than a predetermined detail value, are considered when preparing and visualizing the process-product matrix. In a first cell b_{1,1}, shown in Fig. 5A, there is only one first application "06_02_20" with a rank value high enough to be presented under the conditions defined by the detail parameter. If the detail parameters are changed, so that the application landscape is presented in more detail, as shown in Fig. 5B, application with a lower rank, such as "05-02-05" are also shown in the first cell b_{1,1}, for example.

A rank may also be defined for processes an products. When rank values for the applications and/or processes and/or products are defined, it is possible to adapt the details and the legibility of the visualized application landscape to the intended purpose.

The invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. A computer program can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks such as internal hard disks and removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device such as a CRT (cathode ray tube) or LCD (liquid crystal display) monitor for displaying information to the user and a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or tactile feedback; and input from the user can be received in any form, including acoustic, speech, or tactile input.

The display device can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

An exemplary system for implementing the display device includes a general purpose computing device in the form of a conventional computing environment (e.g. personal computer or a laptop), including a processing unit, a system memory, and a system bus, that couples various system components including the system memory to the processing unit. The processing unit may perform arithmetic, logic and/or control operations by accessing system memory. The system memory may store information and/or instructions for use in combination with processing unit. The system memory may include volatile and non-volatile memory, such as random access memory (RAM) and read only memory (ROM). A basic input/output system (BIOS) containing the basic routines that helps to transfer information between elements within the personal computer, such as during start-up, may be stored in ROM. The system bus may be any of several types of bus structures including a memory bus or memory controller, a peripheral bus, and a local bus using any of a variety of bus architectures.

The personal computer may further include a hard disk drive for reading from and writing to a hard disk, and an external disk drive for reading from or writing to a removable disk. The removable disk may be a magnetic disk for a magnetic disk driver or an optical disk such as a CD ROM for an optical disk drive. The hard disk drive and external disk drive are connected to the system bus by a hard disk drive interface and an external disk drive interface, respectively. The drives and their associated computer-readable media provide nonvolatile storage of computer readable instructions, data structures, program modules and other data for the personal computer. The data structures may include relevant data of the implementation of the visualization method, as described above and, in particular, data for defining the assignment of applications to the plurality of processes performed in connection with a plurality of products. The relevant data may be organized in a database, for example a relational or object database.

Although the exemplary environment described herein employs a hard disk and an external disk, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM or RAM, including an operating system, one or more application programs, other program modules (not shown), and program data. The application programs may include at least a part of the functionality as indicated in Figs. 1 to 5.

A user may enter commands and information, as discussed above, into the personal computer through input devices such as keyboard and mouse. Other input devices may include a microphone (or other sensors), joystick, game pad, scanner, or the like. These and other input devices may be connected to the processing unit through a serial port interface that is coupled to the system bus, or may be collected by other interfaces, such as a parallel port interface, game port or a universal serial bus (USB). Further, information may be printed using printer. The printer, and other parallel input/output devices may be connected to the processing unit through parallel port interface. A monitor or other type of display device is also connected to the system bus via an interface, such as a video input/output. In addition to the monitor, computing environment may include other peripheral output devices, such as speakers or other audible output.

The computing environment may communicate with other electronic devices such as a computer, telephone (wired or wireless), personal digital assistant, television, or the like. To communicate, the computer environment may operate in a networked environment using connections to one or more electronic devices. The computer environment may be networked with a remote computer. The remote computer may be another computing environment such as a server, a router, a network PC, a peer device or other common network node, and may include many or all of the elements described above relative to the computing environment. The logical connections may include a local area network (LAN) and a wide area network (WAN). Such networking environments are commonplace in offices, enterprise-wide computer networks, intranets and the Internet.

When used in a LAN networking environment, the computing environment may be connected to the LAN through a network I/O. When used in a WAN networking environment, the computing environment may include a modem or other means for establishing communications over the WAN. The modem, which may be internal or external to computing environment, is connected to the system bus via the serial port interface. In a networked environment, program modules depicted relative to the computing environment, or portions thereof, may be stored in a remote memory storage device resident on or accessible to remote computer. Furthermore other data relevant to the application of the insurance claim management evaluation method (described in more detail further below) may be resident on or accessible via the remote computer. The data may be stored for example in an object or a relation database. It will be appreciated that the network connections shown are exemplary and other means of establishing a communications link between the electronic devices may be used.

The above-described computing system is only one example of the type of computing system that may be used to implement the display device according to the present invention.

A number of embodiments have been described. Nevertheless, it will be understood that various modifications may be made without departing from the spirit and scope of the invention. Accordingly, other embodiments are within the scope of the following claims.

## Claims

1. Display apparatus (10) for visualizing the assignment of applications to a plurality of processes performed in connection with a plurality of products, the apparatus (10) comprising:
- an input device (12) for receiving data defining the assignment of the applications to the plurality of processes when performed in connection with the plurality of products;
- a matrix definition component (20) for defining a matrix comprising a plurality of cells arranged in
- a plurality of rows representing the plurality of one of the processes and the products; and
- a plurality of columns representing the plurality of the other of the processes and the products;
- a cell assignment component (22) for creating for each of the plurality of cells (a_{i,k}) a content container (26, 28, 30, 32) identifying the applications assigned to the process in the product represented by the cell (a_{i,k});
- an evaluation component (24) capable of performing for at least one cell (a_{1,1}) the following steps:
- reading the content container (26) of the cell (a_{1,1}) for determining the applications assigned to the cell (a_{1,1});
- performing a presentation preparation step for the at least one application comprising the following steps:
- selecting a presentation direction for the application from a direction substantially parallel to the rows and a direction substantially parallel to the columns of the matrix depending on how many of the content containers of the cells in the current row and/or how many of the content containers of the cells in the current column contain the application;
- defining a presentation box (38) extending in the presentation direction over one or more cells comprising the current cell (a_{1,1}) and all cells in which the application is identified in the content container and which are positioned in the presentation direction side by side to each other adjacent to the current cell (a_{1,1});
- determining an application identification pattern for being presented in the presentation box (38); and
- determining the minimum size of the presentation box (38) for enclosing the application identification pattern;
- determining the minimum width of the columns and the minimum height of the rows of the matrix for enclosing the at least one presentation box (38); and
- an output device (36) for visualizing the matrix together with the at least one presentation box (38) enclosing the application identification pattern, wherein
- for each application identified in at least one content container the content container further defines whether the application is activated or deactivated in the cell;
- the apparatus further comprises a component for performing for at least one cell the step of determining for at least one of the assigned applications whether the application is activated or deactivated in the cell;
- the presentation preparation step for the at least one application is only performed if the application is activated in the cell;
- the presentation box is defined so as to extend in the presentation direction over the current cell (a_{1,1}) and all cells in which and only in which the application is activated and which are positioned in the presentation direction side by side to each other adjacent to the current cell; and
- the apparatus (10) further comprises a component for deactivating the application in all cells in which and only in which the application is activated and which are positioned in the presentation direction side by side to each other adjacent to the current cell, and whereinthe apparatus further comprises an overlap elimination component capable of performing
- a step of determining at least one overlap cell (68) in which at least one overlap between presentation boxes (74, 76, 80) for different presentation directions occurs;
- a first overlap elimination step comprising reducing the size of at least one first presentation box (76) having a first presentation direction by shifting a first edge of the first presentation box (76) within the overlap cell (68) in a first shifting direction parallel to the first presentation direction until the first presentation box (76) does no longer overlap with any presentation box (80) having a second presentation direction different from the first presentation direction within the overlap cell (68); and
- after the first overlap elimination step a second overlap elimination step comprising reducing the size of at least one second presentation box (80) having the second presentation direction by shifting a second edge of the second presentation box (80) within the overlap cell (68) in a second shifting direction parallel to the second presentation direction until the second presentation box (80) does no longer overlap with any presentation box (74, 76) having the first presentation direction within the overlap cell (68); and
- after the second overlap elimination step a third overlap elimination step comprising increasing the size of the first presentation box (76) by shifting the first edge of the first presentation box (76) within the overlap cell (68) against the first presentation direction as long as no overlap with any presentation box having the second presentation direction is created within the overlap cell (68).

2. Display apparatus according to claim 1, wherein the evaluation component (24) is capable of performing in the step of selecting a presentation direction the steps of:
- determining a row related appearance number defining how many of the content containers of the cells in the current row contain the application, and determining a column related appearance number defining how many of the content containers of the cells in the current column contain the application; and
- selecting a presentation direction for the application from a direction substantially parallel to the rows and a direction substantially parallel to the columns of the matrix depending on the difference between the row related and the column related appearance number of the application.

3. Display apparatus according to anyone of the preceding claims, wherein the evaluation component (24) is capable of performing in the presentation preparation step a step of assigning the application in the current cell to a presentation slot (42) extending in the presentation direction substantially over the whole matrix, where the presentation slot (42) is a subdivision of the current row or a subdivision of the current column if the presentation direction is substantially parallel to the rows or the columns, respectively, and where the presentation box (38) is positioned substantially inside the presentation slot (42).

4. Display apparatus according to claim 3, wherein assigning the application in the current cell to a presentation slot (42, 46) comprises
- determining, whether one presentation slot for the selected presentation direction, which intersects with the current cell and to which the application has been assigned in another cell, already exists;
- assigning the application to the presentation slot in the current cell, if such one presentation slot already exists;
- creating a new presentation slot (46) and assigning the application in the current cell to the new presentation slot, if such one presentation slot does not already exist.

5. Display apparatus according to claim 3 or 4, where different presentation slots (42, 46) for the same presentation direction do not substantially overlap.

6. Display apparatus according to anyone of claims 3 to 5, further comprising a grouping component capable of performing a step of shifting all presentation boxes (62, 64) located in a first presentation slot (58) to a second presentation slot (54) if for all cells, in which the first presentation slot (58) is occupied by the presentation boxes (62, 64), the second presentation slot (54) is not occupied by any presentation boxes.

7. Computer implemented method of visualizing the assignment of applications to a plurality of processes performed in connection with a plurality of products, the method comprising the steps of:
a) defining a matrix comprising a plurality of cells (a_{i,k}) arranged in
a1) a plurality of rows representing the plurality of one of the processes and the products; and
a2) a plurality of columns representing the plurality of the other of the processes and the products;
b) creating for each of the plurality of cells(a_{i,k}) a content container (26, 28, 30, 32) identifying the applications assigned to the process in the product represented by the cell (a_{i,k});
c) performing for at least one cell (a_{1,1}) the following steps:
c1) reading the content container (26) of the cell (a_{1,1}) for determining the applications assigned to the cell (a₁,₁);
c2) performing a presentation preparation step for the at least one application comprising the following steps:
c2a) selecting a presentation direction for the application from a direction substantially parallel to the rows and a direction substantially parallel to the columns of the matrix depending on how many of the content containers of the cells in the current row and/or how many of the content containers of the cells in the current column contain the application;
c2b) defining a presentation box (38) extending in the presentation direction over one or more cells comprising the current cell (a_{1,1}) and all cells in which the application is identified in the content container (26, 28) and which are positioned in the presentation direction side by side to each other adjacent to the current cell (a_{1,1});
c2c) determining an application identification pattern for being presented in the presentation box (38); and
c2d) determining the minimum size of the presentation box (38) for enclosing the application identification pattern;
d) determining the minimum width of the columns and the minimum height of the rows of the matrix for enclosing the at least one presentation box (38);
e) visualizing the matrix together with the at least one presentation box (38) enclosing the application identification pattern,
wherein
- for each application identified in at least one content container (26) the content container further defines whether the application is activated or deactivated in the cell;
- the method further comprises for at least one cell (a_{1,1}) the step of determining for at least one of the assigned applications whether the application is activated or deactivated in the cell;
- the presentation preparation step c2) for the at least one application is only performed if the application is activated in the cell;
- the presentation box is defined so as to extend in the presentation direction over the current cell and all cells in which and only in which the application is activated and which are positioned in the presentation direction side by side to each other adjacent to the current cell; and
- the method further comprises a step of deactivating the application in all cells (a_{1,2}) in which and only in which the application is activated and which are positioned in the presentation direction side by side to each other adjacent to the current cell (a_{1,1});
- the method further comprises the step of determining at least one overlap cell (68) in which at least one overlap between presentation boxes (74, 76, 80) for different presentation directions occurs; and
- a first overlap elimination step comprising reducing the size of at least one first presentation box (76) having a first presentation direction by shifting a first edge of the first presentation box (76) within the overlap cell (68) in a first shifting direction parallel to the first presentation direction until the first presentation box (76) does no longer overlap with any presentation box (80) having a second presentation direction different from the first presentation direction within the overlap cell (68); and
- after the first overlap elimination step a second overlap elimination step comprising reducing the size of at least one second presentation box (80) having the second presentation direction by shifting a second edge of the second presentation box (89) within the overlap cell (68) in a second shifting direction parallel to the second presentation direction until the second presentation box (80) does no longer overlap with any presentation box (74, 76) having the first presentation direction within the overlap cell (68); and
- after the second overlap elimination step a third overlap elimination step comprising increasing the size of the first presentation box (76) by shifting the first edge of the first presentation box (76) within the overlap cell (68) against the first presentation direction as long as no overlap with any presentation box having the second presentation direction is created within the overlap cell (68).

8. Method according to claim 7, wherein selecting a presentation direction comprises:
- determining a row related appearance number defining how many of the content containers of the cells in the current row contain the application, and determining a column related appearance number defining how many of the content containers of the cells in the current column contain the application;
- selecting a presentation direction for the application from a direction substantially parallel to the rows and a direction substantially parallel to the columns of the matrix depending on the difference between the row related and the column related appearance number of the application.

9. Method according to anyone of the claims 7 to 8, wherein the presentation preparation step c2) comprises a step of assigning the application in the current cell to a presentation slot (42) extending in the presentation direction substantially over the whole matrix, where the presentation slot (42) is a subdivision of the current row or a subdivision of the current column if the presentation direction is substantially parallel to the rows or the columns, respectively, and where the presentation box (38) is positioned substantially inside the presentation slot (42).

10. Method according to claim 9, wherein assigning the application in the current cell (a_{1,1}) to a presentation slot (38) comprises
- determining, whether one presentation slot for the selected presentation direction, which intersects with the current cell and to which the application has been assigned in another cell, already exists;
- assigning the application to the presentation slot in the current cell, if such one presentation slot already exists;
- creating a new presentation slot and assigning the application in the current cell to the new presentation slot, if such one presentation slot does not already exist.

11. Method according to claim 9 or 10, wherein different presentation slots (42, 46) for the same presentation direction do not substantially overlap.

12. Method according to anyone of the claims 9 to 11, further comprising a step of shifting all presentation boxes (62, 64) located in a first presentation slot (58) to a second presentation slot (54) if for all cells, in which the first presentation slot (58) is occupied by the presentation boxes (62, 64), the second presentation slot (54) is not occupied by any presentation boxes.

13. Computer program product comprising program code, which when loaded in a computer system causes the system to perform steps according to a method of one of the claims 7 to 12.

## Patentansprüche

1. Anzeigevorrichtung (10) zum Visualisieren der Zuordnung von Anwendungen zu einer Vielzahl von Prozessen, die in Zusammenhang mit einer Vielzahl von Produkten durchgeführt werden, wobei die Vorrichtung (10) umfasst:
- eine Eingabevorrichtung (12) zum Empfangen von Daten, welche die Zuordnung der Anwendungen zu der Vielzahl von Prozessen definiert, wenn diese in Verbindung mit der Vielzahl von Produkten ausgeführt werden;
- eine Matrixdefinitionskomponente (20) zum Definieren einer Matrix, welche eine Vielzahl von Zellen enthält, welche angeordnet sind in
- einer Vielzahl von Reihen, welche die Vielzahl eines der Prozesse und der Produkte repräsentiert; und
- einer Vielzahl von Spalten, welche die Vielzahl der anderen der Prozesse und der Produkte repräsentiert;
- eine Zellenzuordnungskomponente (22) zum Erzeugen für jede der Vielzahl von Zellen (a_{i,k}) eine Inhaltsliste (26, 28, 30, 32), welche die Anwendungen identifiziert, die dem Prozess bei dem durch die Zelle (a_{i,k}) repräsentierten Produkt zugeordnet sind;
- eine Auswertungskomponente (24), die in der Lage ist, für zumindest eine Zelle (a_{1,1}) die folgenden Schritte durchzuführen:
- Lesen der Inhaltsliste (26) der Zelle (a_{1,1}), um die der Zelle (a_{1,1}) zugeordneten Anwendungen zu bestimmen;
- Durchführen eines Präsentationsvorbereitungsschritts für die zumindest eine Anwendung, umfassend die folgenden Schritte:
- Auswählen einer Präsentationsrichtung für die Anwendung aus einer Richtung im Wesentlichen parallel zu den Reihen und einer Richtung im Wesentlichen parallel zu den Spalten der Matrix in Abhängigkeit davon, wie viele der Inhaltslisten der Zellen in der aktuellen Reihe und/oder wie viele der Inhaltslisten der Zellen in der aktuellen Spalte die Anwendung enthalten;
- Definieren eines Präsentationskastens (38), der sich in Präsentationsrichtung über eine Zelle oder mehrere Zellen erstreckt, umfassend die aktuelle Zelle (a_{1,1}) und alle Zellen, in denen die Anwendung in der Inhaltsliste identifiziert ist und welche in Präsentationsrichtung nebeneinander angrenzend an die aktuelle Zelle (a_{1,1}) angeordnet sind;
- Bestimmen eines Anwendungsidentifikationsmusters, das in dem Präsentationskasten (38) anzuzeigen ist; und
- Bestimmen der minimalen Größe des Präsentationskastens (38), um das Anwendungsidentifikationsmuster einzuschließen;
- Bestimmen der minimalen Breite der Spalten und der minimalen Höhe der Reihen der Matrix zum Einschließen des mindestens einen Präsentationskastens (38); und
- eine Ausgabevorrichtung (36) zum Visualisieren der Matrix zusammen mit dem mindestens einen Präsentationskasten (38), der das Anwendungsidentifikationsmuster einschließt,
wobei
- die Inhaltsliste für jede Anwendung, die in der mindestens einen Inhaltsliste identifiziert ist, ferner definiert, ob die Anwendung in der Zelle aktiviert oder deaktiviert ist;
- die Vorrichtung ferner eine Komponente umfasst, die für mindestens eine Zelle den Schritt durchführt, in dem bestimmt wird, ob die Anwendung in der Zelle aktiviert oder deaktiviert ist;
- der Präsentationsvorbereitungsschritt für die mindestens eine Anwendung nur durchgeführt wird, wenn die Anwendung in der Zelle aktiviert ist;
- der Präsentationskasten so definiert ist, dass er sich in Präsentationsrichtung über die aktuelle Zelle (a_{1,1}) und alle Zellen erstreckt, in denen, und nur in denen die Anwendung aktiviert ist und die in der Präsentationsrichtung nebeneinander angrenzend an die aktuelle Zelle angeordnet sind; und
- die Vorrichtung (10) ferner eine Komponente zum Deaktivieren der Anwendung in allen Zellen, in denen, und nur in denen die Anwendung aktiviert ist und die in Präsentationsrichtung nebeneinander angrenzend an die aktuelle Zelle angeordnet sind, und wobei die Vorrichtung ferner eine Überlappungsbeseitigungskomponente umfasst, die in der Lage ist auszuführen
- einen Schritt, in dem zumindest eine Überlappungszelle (68) ermittelt wird, in der zumindest eine Überlappung zwischen Präsentationskästen (74, 76, 80) für unterschiedliche Präsentationsrichtungen auftritt;
- einen ersten Überlappungsbeseitigungsschritt, umfassend das Reduzieren der Größe zumindest eines ersten Präsentationskastens (76), der zumindest eine erste Präsentationsrichtung hat, durch Verschieben zumindest einer ersten Kante des ersten Präsentationskastens (76) in der Überlappungszelle (68) in einer ersten Verschiebungsrichtung parallel zu der ersten Präsentationsrichtung, bis der erste Präsentationskasten (76) nicht mehr mit einem Präsentationskasten (80) in der Überlappungszelle (68) überlappt, der eine zweite Präsentationsrichtung hat, die sich von der ersten Präsentationsrichtung unterscheidet; und
- nach dem ersten Überlappungsbeseitigungsschritt einen zweiten Überlappungsbeseitigungsschritt, umfassend das Reduzieren der Größe zumindest eines zweiten Präsentationskastens (80), der eine zweite Präsentationsrichtung hat, durch Verschieben einer zweiten Kante des zweiten Präsentationskastens (80) in der Überlappungszelle (68) in eine zweite Verschiebungsrichtung parallel zu zweiten Präsentationsrichtung, bis der zweite Präsentationskasten (80) nicht mehr mit einem Präsentationskasten (74, 76) in der Überlappungszelle (68) überlappt, welcher die erste Präsentationsrichtung hat; und
- nach dem zweiten Überlappungsbeseitigungsschritt einen dritten Überlappungsbeseitigungsschritt, umfassend das Vergrößern der Größe des ersten Präsentationskastens (76) durch Verschieben der ersten Kante des ersten Präsentationskastens (76) in der Überlappungszelle (68) entgegen der ersten Präsentationsrichtung, so lange in der Überlappungszelle (68) keine Überlappung mit einem Präsentationskasten mit einem Präsentationskasten erzeugt wird, der die zweite Präsentationsrichtung hat.

2. Anzeigevorrichtung nach Anspruch 1, wobei die Auswertungskomponente (24) in der Lage ist, bei dem Schritt des Auswählens einer Präsentationsrichtung die folgenden Schritte auszuführen:
- Bestimmen einer reihenbezogenen Auftrittszahl, welche definiert, wie viele der Inhaltslisten der Zellen in der aktuellen Reihe die Anwendung enthalten, und Bestimmen einer spaltenbezogenen Auftrittszahl, welche definiert, wie viele der Inhaltslisten der Zellen in der aktuellen Spalte die Anwendung enthalten; und
- Auswählen einer Präsentationsrichtung für die Anwendung aus einer Richtung im Wesentlichen parallel zu den Reihen und einer Richtung im Wesentlichen parallel zu den Spalten in Abhängigkeit des Unterschieds zwischen der reihenbezogenen und der spaltenbezogenen Auftrittszahl der Anwendung.

3. Anzeigevorrichtung nach einem der vorhergehenden Ansprüche, wobei die Auswertungskomponente (24) in der Lage ist, bei dem Präsentationsvorbereitungsschritt einen Schritt auszuführen, bei dem die Anwendung in der aktuellen Zelle einem Präsentationsplatz (42) zugeordnet wird, welcher sich in Präsentationsrichtung im Wesentlichen über die gesamte Matrix erstreckt, wobei der Präsentationsplatz (42) eine Unterteilung der aktuellen Reihe oder eine Unterteilung der aktuellen Spalte ist, wenn die Präsentationsrichtung im Wesentlichen parallel zu den Reihen bzw. parallel zu den Spalten ist, und wobei der Präsentationskasten (38) im Wesentlichen in dem Präsentationsplatz (42) positioniert ist.

4. Anzeigevorrichtung nach Anspruch 3, wobei das Zuordnen der Anwendung in der aktuellen Zelle zu einem Präsentationsplatz (42, 46) umfasst:
- Bestimmen, ob ein Präsentationsplatz für die gewählte Präsentationsrichtung, welcher die aktuelle Zelle schneidet und dem die Anwendung in einer anderen Zelle zugeordnet wurde, bereits vorhanden ist;
- Zuordnen der Anwendung zu dem Präsentationsplatz in der aktuellen Zelle, wenn ein derartiger Präsentationsplatz bereits vorhanden ist;
- Erzeugen eines neuen Präsentationsplatzes (46) und Zuordnen der Anwendung in der aktuellen Zelle zu dem neuen Präsentationsplatz, wenn ein derartiger Präsentationsplatz nicht bereits vorhanden ist.

5. Anzeigevorrichtung nach Anspruch 3 oder 4, wobei unterschiedliche Präsentationsplätze (42, 46) für die gleiche Präsentationsrichtung sich nicht wesentlich überlappen.

6. Anzeigevorrichtung nach einem der Ansprüche 3 bis 5, ferner umfassend eine Gruppierungskomponente, welche in der Lage ist, einen Schritt durchzuführen, in dem alle Präsentationskästen (62, 64), die in einem ersten Präsentationsplatz (58) angeordnet sind, zu einem zweiten Präsentationsplatz (54) zu verschieben, wenn für alle Zellen, bei denen der erste Präsentationsplatz (58) durch die Präsentationskästen (62, 64) besetzt ist, der zweite Präsentationsplatz (54) nicht durch Präsentationskästen besetzt ist.

7. Computerimplementiertes Verfahren zum Visualisieren der Zuordnung von Anwendungen zu einer Vielzahl von Prozessen, die in Verbindung mit einer Vielzahl von Produktion ausgeführt werden, wobei das Verfahren die folgenden Schritte umfasst:
a) Definieren einer Matrix, welche eine Vielzahl von Zellen (a_{i,k}) enthält, welche angeordnet sind in
a1) einer Vielzahl von Reihen, welche die Vielzahl eines der Prozesse und der Produkte repräsentiert; und
a2) einer Vielzahl von Spalten, welche die Vielzahl der anderen der Prozesse und der Produkte repräsentiert;
b) Erzeugen für jede der Vielzahl von Zellen (a_{i,k}) eine Inhaltsliste (26, 28, 30, 32), welche die Anwendungen identifiziert, die dem Prozess bei dem durch die Zelle (a_{i,k}) repräsentierten Produkt zugeordnet sind;
c) Durchführen für zumindest eine Zelle (a_{1,1}) der folgenden Schritte:
c1) Lesen der Inhaltsliste (26) der Zelle (a_{1,1}), um die der Zelle (a_{1,1}) zugeordneten Anwendungen zu bestimmen;
c2) Durchführen eines Präsentationsvorbereitungsschritts für die zumindest eine Anwendung, umfassend die folgenden Schritte:
c2a) Auswählen einer Präsentationsrichtung für die Anwendung aus einer Richtung im Wesentlichen parallel zu den Reihen und einer Richtung im Wesentlichen parallel zu den Spalten der Matrix in Abhängigkeit davon, wie viele der Inhaltslisten der Zellen in der aktuellen Reihe und/oder wie viele der Inhaltslisten der Zellen in der aktuellen Spalte die Anwendung enthalten;
c2b) Definieren eines Präsentationskastens (38), der sich in Präsentationsrichtung über eine Zelle oder mehrere Zellen erstreckt, umfassend die aktuelle Zelle (a_{1,1}) und alle Zellen, in denen die Anwendung in der Inhaltsliste (26, 28) identifiziert ist und welche in Präsentationsrichtung nebeneinander angrenzend an die aktuelle Zelle (a_{1,1}) angeordnet sind;
c2c) Bestimmen eines Anwendungsidentifikationsmusters, das in dem Präsentationskasten (38) anzuzeigen ist; und
c2d) Bestimmen der minimalen Größe des Präsentationskastens (38), um das Anwendungsidentifikationsmuster einzuschließen;
d) Bestimmen der minimalen Breite der Spalten und der minimalen Höhe der Riehen der Matrix zum Einschließen des mindestens einen Präsentationskastens (38); und
e) Visualisieren der Matrix zusammen mit dem mindestens einen Präsentationskasten (38), der das Anwendungsidentifikationsmuster einschließt,
wobei
- die Inhaltsliste für jede Anwendung, die in der mindestens einen Inhaltsliste identifiziert ist, ferner definiert, ob die Anwendung in der Zelle aktiviert oder deaktiviert ist;
- das Verfahren für mindestens eine Zelle (a_{1,1}) ferner den Schritt umfasst, in dem bestimmt wird, ob die Anwendung in der Zelle aktiviert oder deaktiviert ist;
- der Präsentationsvorbereitungsschritt c2) für die mindestens eine Anwendung nur durchgeführt wird, wenn die Anwendung in der Zelle aktiviert ist;
- der Präsentationskasten so definiert ist, dass er sich in Präsentationsrichtung über die aktuelle Zelle (a_{1,1}) und alle Zellen erstreckt, in denen, und nur in denen die Anwendung aktiviert ist und die in der Präsentationsrichtung nebeneinander angrenzend an die aktuelle Zelle angeordnet sind; und
- das Verfahren ferner einen Schritt des Deaktivierens der Anwendung in allen Zellen (a_{1,2}) umfasst, in denen, und nur in denen die Anwendung aktiviert ist und die in Präsentationsrichtung nebeneinander angrenzend an die aktuelle Zelle angeordnet sind;
- das Verfahren ferner einen Schritt umfasst, in dem zumindest eine Überlappungszelle (68) ermittelt wird, in der zumindest eine Überlappung zwischen Präsentationskästen (74, 76, 80) für unterschiedliche Präsentationsrichtungen auftritt; und
- einen ersten Überlappungsbeseitigungsschritt, umfassend das Reduzieren der Größe zumindest eines ersten Präsentationskastens (76), der zumindest eine erste Präsentationsrichtung hat, durch Verschieben zumindest einer ersten Kante des ersten Präsentationskastens (76) in der Überlappungszelle (68) in einer ersten Verschiebungsrichtung parallel zu der ersten Präsentationsrichtung, bis der erste Präsentationskasten (76) in der Überlappungszelle (68) nicht mehr mit einem Präsentationskasten (80) überlappt, der eine zweite Präsentationsrichtung hat, die sich von der ersten Präsentationsrichtung unterscheidet; und
- nach dem ersten Überlappungsbeseitigungsschritt einen zweiten Überlappungsbeseitigungsschritt, umfassend das Reduzieren der Größe zumindest eines zweiten Präsentationskastens (80), der die zweite Präsentationsrichtung hat, durch Verschieben einer zweiten Kante des zweiten Präsentationskastens (80) in der Überlappungszelle (68) in eine zweite Verschiebungsrichtung parallel zu zweiten Präsentationsrichtung, bis der zweite Präsentationskasten (80) nicht mehr mit einem Präsentationskasten (74, 76) in der Überlappungszelle (68) überlappt, welcher die erste Präsentationsrichtung hat; und
- nach dem zweiten Überlappungsbeseitigungsschritt einen dritten Überlappungsbeseitigungsschritt, umfassend das Vergrößern der Größe des ersten Präsentationskastens (76) durch Verschieben der ersten Kante des ersten Präsentationskastens (76) in der Überlappungszelle (68) entgegen der ersten Präsentationsrichtung, so lange in der Überlappungszelle (68) keine Überlappung mit einem Präsentationskasten erzeugt wird, der die zweite Präsentationsrichtung hat.

8. Verfahren nach Anspruch 7, wobei das Auswählen einer Präsentationsrichtung umfasst:
- Bestimmen einer reihenbezogenen Auftrittszahl, welche definiert, wie viele der Inhaltslisten der Zellen in der aktuellen Reihe die Anwendung enthalten, und Bestimmen einer spaltenbezogenen Auftrittszahl, welche definiert, wie viele der Inhaltslisten der Zellen in der aktuellen Spalte die Anwendung enthalten; und
- Auswählen einer Präsentationsrichtung für die Anwendung aus einer Richtung im Wesentlichen parallel zu den Reihen und einer Richtung im Wesentlichen parallel zu den Spalten in Abhängigkeit des Unterschieds zwischen der reihenbezogenen und der spaltenbezogenen Auftrittszahl der Anwendung.

9. Verfahren nach einem der Ansprüche 7 bis 8 wobei der Präsentationsvorbereitungsschritt c2) einen Schritt umfasst, bei dem die Anwendung in der aktuellen Zelle einem Präsentationsplatz (42) zugeordnet wird, welcher sich in Präsentationsrichtung im Wesentlichen über die gesamte Matrix erstreckt, wobei der Präsentationsplatz (42) eine Unterteilung der aktuellen Reihe oder eine Unterteilung der aktuellen Spalte ist, wenn die Präsentationsrichtung im Wesentlichen parallel zu den Reihen bzw. parallel zu den Spalten ist, und wobei der Präsentationskasten (38) im Wesentlichen in dem Präsentationsplatz (42) positioniert ist.

10. Verfahren nach Anspruch 9, wobei das Zuordnen der Anwendung in der aktuellen Zelle (a_{1,1}) zu einem Präsentationsplatz (42, 46) umfasst:
- Bestimmen, ob ein Präsentationsplatz für die gewählte Präsentationsrichtung, welcher die aktuelle Zelle schneidet und dem die Anwendung in einer anderen Zelle zugeordnet wurde, bereits vorhanden ist;
- Zuordnen der Anwendung zu dem Präsentationsplatz in der aktuellen Zelle, wenn ein derartiger Präsentationsplatz bereits vorhanden ist;
- Erzeugen eines neuen Präsentationsplatzes und Zuordnen der Anwendung in der aktuellen Zelle zu dem neuen Präsentationsplatz, wenn ein derartiger Präsentationsplatz nicht bereits vorhanden ist.

11. Verfahren nach Anspruch 9 oder 10, wobei unterschiedliche Präsentationsplätze (42, 46) für die gleiche Präsentationsrichtung sich nicht wesentlich überlappen.

12. Verfahren nach einem der Ansprüche 9 bis 11, ferner umfassend einen Schritt, in dem alle Präsentationskästen (62, 64), die in einem ersten Präsentationsplatz (58) angeordnet sind, zu einem zweiten Präsentationsplatz (54) verschoben werden, wenn für alle Zellen, bei denen der erste Präsentationsplatz (58) durch die Präsentationskästen (62, 64) besetzt ist, der zweite Präsentationsplatz (54) nicht durch Präsentationskästen besetzt ist.

13. Computerprogrammprodukt, umfassend einen Programmcode, welcher, in ein Computersystem geladen, das System veranlasst die Schritte gemäß einem Verfahren nach einem der Ansprüche 7 bis 12 durchzuführen.

## Revendications

1. Appareil d'affichage (10) pour visualiser l'attribution d'applications à une pluralité de processus réalisés en connexion avec une pluralité de produits, l'appareil (10) comprenant :
- un dispositif d'entrée (12) pour recevoir des données définissant l'attribution des applications à la pluralité de processus lorsqu'ils sont réalisés en connexion avec la pluralité de produits ;
- un composant de définition de matrice (20) pour définir une matrice comprenant une pluralité de cellules agencées en
- une pluralité de rangées représentant la pluralité d'un des processus et des produits ; et
- une pluralité de colonnes représentant la pluralité de l'autre des processus et des produits ;
- un composant d'attribution de cellule (22) pour créer pour chacune de la pluralité de celles (a_{i,k}) un récipient de contenu (26, 28, 30, 32) identifiant les applications attribuées au processus dans le produit représenté par la cellule (a_{i,k}) ;
- un composant d'évaluation (24) capable de réaliser pour au moins une cellule (a_{1,1}) les étapes suivantes :
- lire le récipient de contenu (26) de la cellule (a_{1,1}) pour déterminer les applications attribuées à la cellule (a_{1,1}) ;
- réaliser une étape de présentation de présentation pour l'au moins une application comprenant les étapes suivantes :
- sélectionner une direction de présentation pour l'application parmi une direction essentiellement parallèle aux rangées et une direction essentiellement parallèle aux colonnes de la matrice en fonction du nombre de récipients de contenu des cellules dans la rangée actuelle et/ou du nombre de récipients de contenu des cellules dans la colonne actuelle qui contiennent l'application ;
- définir une boîte de présentation (38) s'étendant dans la direction de présentation sur une ou plusieurs cellules comprenant la cellule actuelle (a_{1,1}) et toutes les cellules dans lesquelles l'application est identifiée dans le récipient de contenu et qui sont positionnées dans la direction de présentation côte à côte les unes aux autres de manière adjacente à la cellule actuelle (a_{1,1}) ;
- déterminer un motif d'identification d'application pour être présenté dans la boîte de présentation (38) ; et
- déterminer la taille minimale de la boîte de présentation (38) pour entourer le motif d'identification d'application ;
- déterminer la largeur minimale des colonnes et la hauteur minimale des rangées de la matrice pour entourer l'au moins une boîte de présentation (38) ; et
- un dispositif de sortie (36) pour visualiser la matrice avec l'au moins une boîte de présentation (38) entourant le motif d'identification d'application, dans lequel
- pour chaque application identifiée dans au moins un récipient de contenu, le récipient de contenu définit en outre si l'application est activée ou désactivée dans la cellule ;
- l'appareil comprend en outre un composant pour réaliser pour au moins une cellule l'étape consistant à déterminer pour au moins une des applications attribuées si l'application est activée ou désactivée dans la cellule ;
- l'étape de préparation de présentation pour l'au moins une application est uniquement réalisée si l'application est activée dans la cellule ;
- la boîte de présentation est définie de manière à s'étendre dans la direction de présentation sur la cellule actuelle (a_{1,1}) et toutes les cellules dans lesquelles et uniquement dans lesquelles l'application est activée et qui sont positionnées dans la direction de présentation côte à côte les unes aux autres de manière adjacente à la cellule actuelle ; et
- l'appareil (10) comprend en outre un composant pour désactiver l'application dans toutes les cellules dans lesquelles et uniquement dans lesquelles l'application est activée et qui sont positionnées dans la direction de présentation côte à côte les unes aux autres de manière adjacente à la cellule actuelle, et dans lequel l'appareil comprend en outre un composant d'élimination de chevauchement capable de réaliser
- une étape consistant à déterminer au moins une cellule de chevauchement (68) dans laquelle au moins un chevauchement entre des boîtes de présentation (74, 76, 80) pour différentes directions de présentation se produit ;
- une première étape d'élimination de chevauchement comprenant réduire la taille d'au moins une première boîte de présentation (76) ayant une première direction de présentation en décalant un premier bord de la première boîte de présentation (76) au sein de la cellule de chevauchement (68) dans une première direction de décalage parallèle à la première direction de présentation jusqu'à ce que la première boîte de présentation (76) ne chevauche plus de boîte de présentation (80) ayant une seconde direction de présentation différente de la première direction de présentation au sein de la cellule de chevauchement (68) ; et
- après la première étape d'élimination de chevauchement, une deuxième étape d'élimination de chevauchement comprenant réduire la taille d'au moins une deuxième boîte de présentation (80) ayant la deuxième direction de présentation en décalant un deuxième bord de la deuxième boîte de présentation (80) au sein de la cellule de chevauchement (68) dans une deuxième direction de décalage parallèle à la deuxième direction de présentation jusqu'à ce que la deuxième boîte de présentation (80) ne chevauche plus de boîte de présentation (74, 76) ayant la première direction de présentation au sein de la cellule de chevauchement (68) ; et
- après la deuxième étape d'élimination de chevauchement, une troisième étape d'élimination de chevauchement comprenant augmenter la taille de la première boîte de présentation (76) en décalant le premier bord de la première boîte de présentation (76) au sein de la cellule de chevauchement (68) à l'encontre de la première direction de présentation tant qu'aucun chevauchement avec une boîte de présentation quelconque ayant la deuxième direction de présentation n'est créé au sein de la cellule de chevauchement (68).

2. Appareil d'affichage selon la revendication 1, dans lequel le composant d'évaluation (24) est capable de réaliser dans l'étape consistant à sélectionner une direction de présentation les étapes consistant à :
- déterminer un nombre d'apparitions lié à la rangée définissant le nombre de récipients de contenu des cellules dans la rangée actuelle qui contiennent l'application, et déterminer un nombre d'apparitions lié à la colonne définissant le nombre de récipients de contenu des cellules dans la colonne actuelle qui contiennent l'application ; et
- sélectionner une direction de présentation pour l'application parmi une direction essentiellement parallèle aux rangées et une direction essentiellement parallèle aux colonnes de la matrice en fonction de la différence entre le nombre d'apparitions lié à la rangée et à la colonne de l'application.

3. Appareil d'affichage selon l'une quelconque des revendications précédentes, dans lequel le composant d'évaluation (24) est capable de réaliser dans l'étape de préparation de présentation une étape consistant à attribuer l'application dans la cellule actuelle à une fente de présentation (42) s'étendant dans la direction de présentation essentiellement sur la matrice entière, où la fente de présentation (42) est une subdivision de la rangée actuelle ou une subdivision de la colonne actuelle si la direction de présentation est essentiellement parallèle aux rangées ou aux colonnes, respectivement, et où la boîte de présentation (38) est positionnée essentiellement à l'intérieur de la fente de présentation (42).

4. Appareil d'affichage selon la revendication 3, dans lequel attribuer l'application dans la cellule actuelle à une fente de présentation (42, 46) comprend
- déterminer si une fente de présentation pour la direction de présentation sélectionnée qui coupe la cellule actuelle et à laquelle l'application a été attribuée dans une autre cellule existe déjà ;
- attribuer l'application à la fente de présentation dans la cellule actuelle si une telle fente de présentation existe déjà ;
- créer une nouvelle fente de présentation (46) et attribuer l'application dans la cellule actuelle à la nouvelle fente de présentation si une telle fente de présentation n'existe pas déjà.

5. Appareil d'affichage selon la revendication 3 ou 4, où différentes fentes de présentation (42, 46) pour la même direction de présentation ne se chevauchent essentiellement pas.

6. Appareil d'affichage selon l'une quelconque des revendications 3 à 5, comprenant en outre un composant de regroupement capable de réaliser une étape consistant à décaler toutes les boîtes de présentation (62, 64) situées dans une première fente de présentation (58) vers une seconde fente de présentation (54) si, pour toutes les cellules dans lesquelles la première fente de présentation (58) est occupée par les boîtes de présentation (62, 64), la seconde fente de présentation (54) n'est pas occupée par des boîtes de présentation.

7. Procédé mis en oeuvre par ordinateur de visualisation de l'attribution d'applications à une pluralité de processus réalisés en connexion avec une pluralité de produits, le procédé comprenant les étapes consistant à :
a) définir une matrice comprenant une pluralité de cellules (a_{i,k}) agencées en
a1) une pluralité de rangées représentant la pluralité d'un des processus et des produits ; et
a2) une pluralité de colonnes représentant la pluralité de l'autre des processus et des produits ;
b) créer pour chacune de la pluralité de celles (a_{i,k}) un récipient de contenu récipient (26, 28, 30, 32) identifiant les applications attribuées au processus dans le produit représenté par la cellule (a_{i,k}) ;
c) réaliser pour au moins une cellule (a_{1,1}) les étapes suivantes :
c1) lire le récipient de contenu (26) de la cellule (a_{1,1}) pour déterminer les applications attribuées à la cellule (a_{1,1}) ;
c2) réaliser une étape de présentation de présentation pour l'au moins une application comprenant les étapes suivantes :
c2a) sélectionner une direction de présentation pour l'application parmi une direction essentiellement parallèle aux rangées et une direction essentiellement parallèle aux colonnes de la matrice en fonction du nombre de récipients de contenu des cellules dans la rangée actuelle et/ou du nombre de récipients de contenu des cellules dans la colonne actuelle qui contiennent l'application ;
c2b) définir une boîte de présentation (38) s'étendant dans la direction de présentation sur une ou plusieurs cellules comprenant la cellule actuelle (a_{1,1}) et
toutes les cellules dans lesquelles l'application est identifiée dans le récipient de contenu (26, 28) et qui sont positionnées dans la direction de présentation côte à côte les unes aux autres de manière adjacente à la cellule actuelle (a_{1,1}) ;
c2c) déterminer un motif d'identification d'application pour être présenté dans la boîte de présentation (38) ; et
c2d) déterminer la taille minimale de la boîte de présentation (38) pour entourer le motif d'identification d'application ;
d) déterminer la largeur minimale des colonnes et la hauteur minimale des rangées de la matrice pour entourer l'au moins une boîte de présentation (38) ;
e) visualiser la matrice avec l'au moins une boîte de présentation (38) entourant le motif d'identification d'application,
dans lequel
- pour chaque application identifiée dans au moins un récipient de contenu (26), le récipient de contenu définit en outre si l'application est activée ou désactivée dans la cellule ;
- le procédé comprend en outre pour au moins une cellule (a_{1,1}) l'étape consistant à déterminer pour au moins une des applications attribuées si l'application est activée ou désactivée dans la cellule ;
- l'étape de préparation de présentation c2) pour l'au moins une application est uniquement réalisée si l'application est activée dans la cellule ;
- la boîte de présentation est définie de manière à s'étendre dans la direction de présentation sur la cellule actuelle et toutes les cellules dans lesquelles et uniquement dans lesquelles l'application est activée et qui sont positionnées dans la direction de présentation côte à côte les unes aux autres de manière adjacente à la cellule actuelle ; et
- le procédé comprend en outre une étape consistant à désactiver l'application dans toutes les cellules (a_{1,2}) dans lesquelles et uniquement dans lesquelles l'application est activée et qui sont positionnées dans la direction de présentation côte à côte les unes aux autres de manière adjacente à la cellule actuelle (a_{1,1}) ;
- le procédé comprend en outre l'étape consistant à déterminer au moins une cellule de chevauchement (68) dans laquelle au moins un chevauchement entre des boîtes de présentation (74, 76, 80) pour différentes directions de présentation se produit ; et
- une première étape d'élimination de chevauchement comprenant réduire la taille d'au moins une première boîte de présentation (76) ayant une première direction de présentation en décalant un premier bord de la première boîte de présentation (76) au sein de la cellule de chevauchement (68) dans une première direction de décalage parallèle à la première direction de présentation jusqu'à ce que la première boîte de présentation (76) ne chevauche plus de boîte de présentation (80) ayant une seconde direction de présentation différente de la première direction de présentation au sein de la cellule de chevauchement (68) ; et
- après la première étape d'élimination de chevauchement, une deuxième étape d'élimination de chevauchement comprenant réduire la taille d'au moins une deuxième boîte de présentation (80) ayant la deuxième direction de présentation en décalant un deuxième bord de la deuxième boîte de présentation (89) au sein de la cellule de chevauchement (68) dans une deuxième direction de décalage parallèle à la deuxième direction de présentation jusqu'à ce que la deuxième boîte de présentation (80) ne chevauche plus de boîte de présentation (74, 76) ayant la première direction de présentation au sein de la cellule de chevauchement (68) ; et
- après la deuxième étape d'élimination de chevauchement, une troisième étape d'élimination de chevauchement comprenant augmenter la taille de la première boîte de présentation (76) en décalant le premier bord de la première boîte de présentation (76) au sein de la cellule de chevauchement (68) à l'encontre de la première direction de présentation tant qu'aucun chevauchement avec une boîte de présentation quelconque ayant la deuxième direction de présentation n'est créé au sein de la cellule de chevauchement (68).

8. Procédé selon la revendication 7, dans lequel sélectionner une direction de présentation comprend :
- déterminer un nombre d'apparitions lié à la rangée définissant le nombre de récipients de contenu des cellules dans la rangée actuelle qui contiennent l'application, et déterminer un nombre d'apparitions lié à la colonne définissant le nombre de récipients de contenu des cellules dans la colonne actuelle qui contiennent l'application ;
- sélectionner une direction de présentation pour l'application parmi une direction essentiellement parallèle aux rangées et une direction essentiellement parallèle aux colonnes de la matrice en fonction de la différence entre le nombre d'apparitions lié à la rangée et à la colonne de l'application.

9. Procédé selon l'une quelconque des revendications 7 à 8, dans lequel l'étape de préparation de présentation c2) comprend une étape consistant à attribuer l'application dans la cellule actuelle à une fente de présentation (42) s'étendant dans la direction de présentation essentiellement sur la matrice entière, où la fente de présentation (42) est une subdivision de la rangée actuelle ou une subdivision de la colonne actuelle si la direction de présentation est essentiellement parallèle aux rangées ou aux colonnes, respectivement, et où la boîte de présentation (38) est positionnée essentiellement à l'intérieur de la fente de présentation (42).

10. Procédé selon la revendication 9, dans lequel attribuer l'application dans la cellule actuelle (a_{1,1}) à une fente de présentation (38) comprend
- déterminer si une fente de présentation pour la direction de présentation sélectionnée qui coupe la cellule actuelle et à laquelle l'application a été attribuée dans une autre cellule existe déjà ;
- attribuer l'application à la fente de présentation dans la cellule actuelle si une telle fente de présentation existe déjà ;
- créer une nouvelle fente de présentation et attribuer l'application dans la cellule actuelle à la nouvelle fente de présentation si une telle fente de présentation n'existe pas déjà.

11. Procédé selon la revendication 9 ou 10, dans lequel différentes fentes de présentation (42, 46) pour la même direction de présentation ne se chevauchent essentiellement pas.

12. Procédé selon l'une quelconque des revendications 9 à 11, comprenant en outre une étape consistant à décaler toutes les boîtes de présentation (62, 64) situées dans la première fente de présentation (58) vers une seconde fente de présentation (54) si, pour toutes les cellules dans lesquelles la première fente de présentation (58) est occupée par les boîtes de présentation (62, 64), la seconde fente de présentation (54) n'est pas occupée par des boîtes de présentation.

13. Produit de programme informatique comprenant du code de programme qui, lors de son chargement dans un système informatique, amène le système à réaliser des étapes conformément à un procédé selon l'une des revendications 7 à 12.
